# EUROPÄISCHE PATENTSCHRIFT

(11) **EP 3 822 100 B1**
(45) Veröffentlichungstag und Bekanntmachung des Hinweises auf die Patenterteilung: **27.04.2022**
(21) Anmeldenummer: 20200647.4
(22) Anmeldetag: 07.10.2020
(51) Int. Cl.: B60G 11/27, B29C 45/14, B29C 65/70, B29C 65/00, F16F 9/05, F16F 9/04

(54) **LUFTFEDERKOMPONENTE**
AIR SPRING COMPONENT
COMPOSANT FORMANT RESSORT PNEUMATIQUE

(30) Priorität: 15.11.2019 DE 102019130989
(43) Veröffentlichungstag der Anmeldung: 19.05.2021
(73) Patentinhaber: Vibracoustic SE, 64293 Darmstadt (DE)
(72) Erfinder: Götz, Harald, 21149 Hamburg (DE)
(74) Vertreter: Patentanwälte Olbricht Buchhold Keulertz

(56) Entgegenhaltungen:
- EP-A1- 0 681 898
- EP-A1- 2 959 876
- WO-A1-2007/104671
- DE-A1-102013 113 737
- JP-A- H11 179 758

## Beschreibung

Die Erfindung betrifft eine Luftfederkomponente für eine Luftfeder, ein Luftfederbein oder einen Luftfederdämpfer, die ein erstes Bauteil aus einem ersten Werkstoff, ein zweites Bauteil aus einem zweiten Werkstoff und ein Fügewerkstoff aus einem dritten Werkstoff aufweist. Ferner betrifft die Erfindung eine Luftfeder, ein Luftfederbein oder einen Luftfederdämpfer mit einer derartigen Luftfederkomponente sowie ein Verfahren zur Herstellung einer derartigen Luftfederkomponente.

Luftfedern oder auch Luftfederbeine sind seit Jahrzenten fester Bestandteil von Federungssystemen in Schienenfahrzeugen, Nutzfahrzeugen und in Personenkraftfahrzeugen. Durch derartige Federungssysteme werden die hohen Komfortanforderungen der Kunden von den verschiedenen Fahrzeugen erfüllt. Schwere Nutzfahrzeuge haben heute zu fast 100 % Luftfedern. Beispielsweise sind die Hinterachsen eines Nutzfahrzeugs starken Lastschwankungen ausgesetzt. Im Betrieb ohne Auflieger müssen die Achsen nur das Eigengewicht der Zugmaschine tragen. Bei einem voll beladenen Sattelzug hingegen wirken auf die beiden Hinterachsen Lasten von jeweils mehr als zehn Tonnen. Deswegen werden an den Achsen schwerer Lkw-wie auch beim Auflieger oder Anhänger - heute fast ausschließlich Luftfedern eingesetzt. Luftfederdämpfer werden bei Personenkraftwagen, Nutzfahrzeugen aber genauso auch Motorrädern zur Federung und Dämpfung von Schwingungen verwendet.

Luftfedern bestehen aus einem mit Druckluft gefüllten Topf und einem Abrollkolben mit mechanischer Verbindung zur Achse. Zwischen beiden befinden sich ein Balg und ein Kolben, die die Wirkfläche für die Druckluft bilden. Insbesondere der Abrollkolben oder auch der Topf einer Luftfeder werden als Luftfederkomponente bezeichnet, die während des Betriebes druckbeaufschlagt sind. Bei einer Belastung rollt sich der Luftfederbalg an der Außenfläche des Abrollkolbens ab. Über den Abrollkolben erfolgt zudem die Anbindung der Luftfeder an einem Fahrzeugteil.

Die Druckluft ist das einzig federnde Medium einer Luftfeder. Wird das Luftvolumen in der eingeschlossenen Luftfederkomponente reduziert, steigt der Druck. Wenn das Luftvolumen wieder vergrößert wird, fällt der Luftdruck ab. Dies stellt beispielsweise einen Lastzyklus dar. Die Höhe des auftretenden Drucks ist folglich unter anderem durch die Größe des Volumenunterschieds und des Gewichts des Fahrzeugs abhängig. Es treten somit entsprechend hohe Luftdrücke durch die vorwiegende Verwendung bei schweren Fahrzeugen auf. Zusammen mit einer geringeren Verfügbarkeit an Bauraum für eine hohe Anzahl an Zyklen, wobei stets eine ausreichende Dichtheit aufgewiesen werden muss, ist eine luftdichte, belastbare und feste Verbindung von insbesondere dünnwandigen Bauteilen essentiell.

Ferner ist eine mehrteilige Ausgestaltung der Luftfederkomponenten allein schon aus fertigungstechnischen Gründen erforderlich. Denn Luftfederkomponenten werden heutzutage aus Gewichts- und Kostengründen zumeist aus Kunststoff im Spritzgussverfahren oder im Schleudergussverfahren hergestellt. Zur Erhöhung der Steifigkeit und Belastbarkeit eines aus Kunststoff gefertigten Abrollkolbens sind dabei oftmals innenliegende Verstärkungsrippen erforderlich. Die sich dabei ergebenden Hinterschneidungen lassen sich bei einteilig hergestellten Luftfederkomponenten nur schwer oder zumeist gar nicht entformen.

Dadurch ist eine mehrteilige Ausgestaltung der Luftfederkomponente notwendig.

Eine zweiteilige beziehungsweise mehrteilige Ausgestaltung hat jedoch den Nachteil, dass besondere konstruktive Maßnahmen zur Abdichtung der Einzelteile ergriffen werden müssen. Insbesondere ist darauf zu achten, dass an der Fügestelle der beiden Einzelteile eine ausreichende Dichtheit gegeben ist, um eine einwandfreie Funktion der Luftfeder zu gewährleisten.

Aus DE 102013 113 737 A1 ist eine Luftfederkomponente bekannt, die mindestens zwei Bauteile mit korrespondierenden Fügebereichen aufweist. Diese werden unter inerter Atmosphäre stoffschlüssig verbunden, sodass die Fügestelle ausreichend dicht, fest sowie temperatur- und alterungsbeständig ist.

Aus den Dokumenten WO 2007/104671 A1 und DE 102013113737 A1 sind jeweils Luftfederkomponenten bekannt, die mindestens zwei Bauteile mit korrespondierenden Fügebereichen aufweisen.

Aus dem Dokument EP 0681898 A1 ist ein Kunststoffteil, aus dem Dokument JP H11 179758 A ist ein Hohlkörperteil aus synthetischem Harz und aus dem Dokument EP 2 959 876 A1 ist ein medizinisches Behälterteil bekannt, wobei alle Dokumente das Verbinden zweiter Teile betreffen. Der Erfindung liegt die Aufgabe zugrunde, eine Luftfederkomponente, eine Luftfeder, ein Luftfederbein oder einen Luftfederdämpfer sowie ein Verfahren zur Herstellung einer Luftfederkomponente zu schaffen, die eine verbesserte luftdichte Verbindung mit einer langen Lebensdauer aufweisen.

Zur Lösung der Aufgabe wird eine Luftfederkomponente mit den Merkmalen des Anspruchs 1 sowie eine Luftfeder, ein Luftfederbein oder ein Luftfederdämpfer mit den Merkmalen des Anspruchs 12 und ein Verfahren zur Herstellung einer Luftfeder, eines Luftfederbeins oder eines Luftfederdämpfers mit den Merkmalen des Anspruchs 13 vorgesehen.

Vorteilhafte Ausgestaltungen sind Gegenstand der jeweiligen abhängigen Ansprüche.

Eine Luftfederkomponente für eine Luftfeder, ein Luftfederbein oder einen Luftfederdämpfer weist ein erstes Bauteil aus einem ersten Werkstoff, ein zweites Bauteil aus einem zweiten Werkstoff, ein Fügewerkstoff aus einem dritten Werkstoff auf, wobei das erste Bauteil und das zweite Bauteil korrespondierende Fügebereiche aufweisen und wobei das erste Bauteil und das zweite Bauteil stoffschlüssig durch Überspritzen der Fügebereiche mit dem Fügewerkstoff miteinander verbunden sind.

Durch das Überspritzen werden die Fügebereiche angeschmolzen, sodass die beiden Bauteile ähnlich einem Schweißverfahren sowohl eine form- als auch stoffschlüssige Verbindung eingehen können. Die Bauteile und der Fügewerkstoff können dabei gleiche oder unterschiedliche Werkstoffe aufweisen, jedoch muss eine Verschweißbarkeit des Fügewerkstoffs mit dem ersten und zweiten Werkstoff gegeben sein. Dadurch können Hohlkörper gebildet werden, die eine ausreichende Dichtheit mit einer hohen Festigkeit aufweisen, die einfach, schnell und kostengünstig herzustellen sind.

Eine derartige Verbindung eignet sich insbesondere für axial beabstandete Bauteile, da diese somit eine besonders flache und zugleich luftdichte Verbindung eingehen können. Darüber hinaus können bei gleichzeitiger hoher Festigkeit höhere Toleranzen zugelassen werden. Unter Toleranzen kann unter anderen folgendes verstanden werden: Abstand der Bauteile oder Ebenheit der Nahtgeometrien zueinander. Indem die Fügebereiche vorzugsweise einen gleichmäßigen Radius zur Längsachse aufweisen, ist es möglich, in einfacher Weise, das Bauteil herzustellen. Darüber hinaus eignet sich eine derartige Ausgestaltung der Luftfederkomponente insbesondere mit Bauteilen, die mittels eines Drehverfahrens hergestellt wurden, verbunden zu werden. Darüber hinaus können die Bauteile auch einen polygonförmigen Querschnitt oder einen asymmetrischen Querschnitt aufweisen. Durch derartige Formen können die besonderen Bauraumanforderungen in einem Fahrzeug berücksichtigt werden.

Eine Luftfederkomponente der zuvor beschriebenen Art kann somit aus mehreren Teilen gefertigt werden, die jeweils eine große Bauteilgröße aufweisen, die durch andere typische Schweißverfahren für Kunststoffbauteile nicht zu einer vergleichbaren Stückkostenanzahl gefertigt werden können. Zugleich kann die Verbindung eine hohe Dauerfestigkeit aufweisen, wodurch eine hohe Anzahl an Lastzyklen, die insbesondere während des Fahrbetriebs auftreten, gewährleistet werden können.

Die Luftfederkomponente kann ein Luftfedertopf, ein Abrollkolben oder ein Zusatzvolumenbehälter sein.

In einer vorteilhaften Ausgestaltung weist der erste und der zweite Werkstoff einen niedrigeren Schmelzpunkt auf als der dritte Werkstoff, sodass der erste und/oder der zweite Werkstoff beim Überspritzen mit dem dritten Werkstoff anschmilzt, um die beiden Bauteile stoffschlüssig zu verbinden. Beispielsweise kann der erste und zweite Werkstoff auf einem PA6 basieren, während der dritte Werkstoff auf einem höherschmelzenden PA66 basiert. In einer weiteren vorteilhaften Ausgestaltung kann dabei auch der erste und/oder der zweite Werkstoff beim Überspritzen mit dem dritten Werkstoff lokal an der Fügezone wieder anschmelzen, um die beiden Bauteile stoffschlüssig zu verbinden.

Die stoffschlüssige Verbindung kann erzeugt werden, indem der dritte Werkstoff in Form von Schmelze die Fügbereiche des ersten und/oder des zweiten Bauteils anschmilzt. Anschließend verbinden sich die Oberflächen des ersten und des dritten Werkstoffes sowie die des zweiten und dritten Werkstoffes stoffschlüssig mittels Diffusionsvorgängen, um im Anschluss gemeinsam zu erstarren. So bildet der dritte Werkstoff eine überbrückende, stoffschlüssige Verbindung zwischen dem ersten und zweiten Bauteil. Durch die Auswahl der Werkstoffe mit den zuvor beschriebenen Eigenschaften wird es ermöglicht, einen Stoffschluss zu erzeugen, ohne zusätzlich ein Schweißverfahren anzuwenden, wie beispielsweise Ultraschallschweißen, Reibschweißen oder Heißgasschweißen. Es wird somit eine Verbindung mit einer hohen Festigkeit und Dichtheit geschaffen.

Vorteilhaft ist das erste Bauteil und das zweite Bauteil axial beabstandet, sodass ein Fügemittelfüllraum gebildet ist, in welchen der Fügewerkstoff eingespritzt ist. Der Fügemittelfüllraum ist definiert durch die zwei angrenzenden Fügebereiche des ersten und des zweiten Bauteils. Ein derartiger Fügemittelfüllraum kann auch als Spalt bezeichnet werden. Der Fügewerkstoff in dem Fügemittelfüllraum kann aufgrund der Haftkräfte auftretenden Zugkräften entgegenwirken und das erste und das zweite Bauteil zusammenhalten.

Vorteilhaft ist der Fügemittelfüllraum konisch zu einer Innenseite hin zulaufend ausgebildet. Die Innenseite befindet sich auf der unter Druck stehenden Luft oder dem Gas zugewandten Seite. Weiterhin vorteilhaft kann die Innenseite des ersten Bauteils und des zweiten Bauteils in einer ebenen Fläche fluchten. Die Außenseite befindet sich auf der zur Innenseite gegenüberliegend Seite. Der Fügewerkstoff wird über die Außenseite in den Fügemittelfüllraum eingespritzt. Durch die zur Außenseite hin konisch auseinander laufende Ausgestaltung wird sichergestellt, dass der Fügewerkstoff mit der gesamten Fläche der Seitenwände des ersten und des zweiten Bauteils des Fügemittelfüllraums eine stoffschlüssige Verbindung eingehen kann. Indem die Bereiche des ersten und des zweiten Bauteils zur Innenseite in Kontakt stehen, während des Anspritzens des dritten Werkstoffes zusammengepresst werden und die Innenseite des ersten Bauteils mit dem zweiten Bauteil fluchtet, wird gewährleistet, dass kein Fügewerkstoff in den Hohlraum gelangt und eine ebene innere Oberfläche geschaffen wird. Der Fügewerkstoff kann somit vorwiegend zur Aufnahme von Spaltkräften ausgelegt werden.

Vorteilhaft sind das erste Bauteil und das zweite Bauteil zu einem luftdichten Holkörper verbunden. Dadurch ergibt sich der Vorteil, dass mit nur einer geringen Anzahl an Bauteilen und einer geringen Anzahl an korrespondierenden Fügebereichen ein luftdichter Raum begrenzt werden kann.

Vorteilhaft weist das erste Bauteil einen Rücksprung und das zweite Bauteil einen Vorsprung auf, wobei der Vorsprung in den Rücksprung formschlüssig eingreift. Eine derartige formschlüssige Verbindung ermöglicht eine geführte Positionierung des ersten Bauteils zum zweiten Bauteil. Dadurch wird sichergestellt, dass der Fügemittelwerkstoff nicht bis zur Innenseite des ersten oder des zweiten Bauteils gelangt. Die Länge des Vorsprungs ist länger als die Tiefe des Rücksprungs, wodurch die Breite des Fügemittelfüllraums definiert ist. Zusätzlich kann die Breite im Wesentlichen konstant verlaufen. Die Innenseite des ersten Bauteils und des zweiten Bauteils können in einer Ebene fluchten.

Die definierte Breite des Fügemittelfüllraums gewährleistet eine konstante Füllmenge an Fügewerkstoff in dem Fügemittelfüllraum, sodass eine homogene Verbindungskraft über die gesamte Naht, bzw. Verbindungslänge hergestellt werden kann.

Vorteilhaft ist die Breite des Fügemittelfüllraums durch die Länge des Vorsprungs und der Tiefe des Rücksprungs definiert. Dadurch kann die Breite des Fügemittelfüllraums bestimmt werden und folglich auch das benötigte Volumen des dritten Werkstoffs zur Füllung des Fügemittelfüllraums. Ein weiterer Parameter wird somit geschaffen, wodurch die Qualität der Verbindung überwacht werden kann. Dabei wird überprüft, ob die berechnete Menge zum Verbinden der Bauteile eingespritzt wurde oder ob beispielsweise Lufteinschlüsse verhindert haben, dass die berechnete Menge zum Überspritzen der Verbindung vollständig eingespritzt wurde.

Vorteilhaft ist die Länge des Vorsprungs auf die Tiefe des Rücksprungs in der Art abgestimmt, dass sich in der formschlüssig eingegriffenen Position ein Fügemittelfüllraum bildet, in welchen der Fügewerkstoff einspritzbar ist. Somit kann der Fügewerkstoff über den gesamten Fügebereich eingespritzt werden, sodass das erste und das zweite Bauteil über die gesamte Verbindung stoffschlüssig mittels des dritten Werkstoffs verbunden ist.

Vorteilhaft weist das erste Bauteil einen ersten Vorsprung mit einer ersten Anpressfläche und das zweite Bauteil einen zweiten Vorsprung mit einer zweiten Anpressfläche auf, die während des Überspritzens aufeinander gepresst werden. Die Längen der Vorsprünge definieren gemeinsam die Breite des Fügemittelfüllraums. Es ergibt sich daraus der Vorteil, dass ein Druck zum Zusammenhalten der Bauteile aufgebracht werden kann, ohne dass ein Bauteil während des Überspritzens abrutscht oder abknickt. Die Positionierung des ersten Bauteils und des zweiten Bauteils wird somit definiert und sichergestellt.

Vorteilhaft weist der Fügewerkstoff einen primären Fügewerkstoffabschnitt und einen sekundären Fügewerkstoffabschnitt auf, wobei der primäre Fügewerkstoffabschnitt den Fügemittelfüllraum füllt und der sekundäre Fügewerkstoffabschnitt sich über einen Bereich der Außenseite der Bauteile erstreckt. Der primäre Fügewerkstoffabschnitt und der sekundäre Fügewerkstoffabschnitt bilden gemeinsam eine monolithische Einheit. Dadurch kann eine deutlich erhöhte Festigkeit der Verbindung hergestellt werden, da der Fügewerkstoff zum einen über den primären Fügewerkstoffabschnitt Zugkräfte und zugleich über den sekundären Fügewerkstoffabschnitt Scherkräfte aufnehmen kann.

Vorteilhaft weist das erste Bauteil und das zweite Bauteil einen Verankerungsvorsprung mit einem Plateau auf, wobei sich der sekundäre Fügewerkstoffabschnitt über das Plateau erstreckt. Aufgrund des Verankerungsvorsprungs kann eine vergrößerte Kontaktfläche bereitgestellt werden, die dem primären Fügewerkstoffabschnitt zur Verfügung steht. Über den sekundären Fügewerkstoffabschnitt, der auf dem Plateau aufliegt, können zusätzlich Scherkräfte aufgenommen werden, sodass eine erhöhte Festigkeit der Verbindung gegeben ist.

Vorteilhaft weist der Fügewerkstoff einen tertiären Fügewerkstoffabschnitt auf, wobei der tertiäre Fügewerkstoffabschnitt im Wesentlichen parallel zum primären Fügewerkstoffabschnitt verläuft und mindestens einen Teil des Verankerungsvorsprungs des ersten Bauteils und einen Teil des Verankerungsvorsprungs des zweiten Bauteils umschließt. Der primäre Fügewerkstoffabschnitt, der sekundäre Fügewerkstoffabschnitt und der tertiären Fügewerkstoffabschnitt bilden dabei eine monolithische Einheit. Über den tertiären Fügewerkstoffbereich kann vorteilhafterweise eine mechanische Verbindung gewährleistet werden, die eine zusätzliche Erhöhung der Festigkeit der Verbindung ermöglicht. Eine derartige Verbindung bedarf einer kontrollierten Aufbringung des Fügemittelwerkstoffs, da insbesondere an dem Übergang zwischen dem sekundären zu dem tertiären Fügewerkstoffabschnitt eine konstante Dicke mit einem gleichbleibenden Radius gewährleistet werden muss, um ein Einschnüren zu verhindern.

Vorteilhaft weist das erste Bauteil und/oder das zweite Bauteil Versteifungsrippen auf. Diese Versteifungsrippen sorgen für eine ausreichende Stabilität und Steifigkeit der Bauteile bzw. der Luftfederkomponente.

Vorteilhaft ragen die Rippen von einer Gehäusewand der Bauteile radial nach außen ab. Dadurch kann das Bauteil so gestaltet werden, dass der Fügebereich am äußeren Umfang des Bauteils angeordnet ist. Hierdurch kann die Oberfläche der Fügebereiche vergrößert werden.

Vorteilhaft sind der erste Werkstoff und der zweite Werkstoff PA 6 und der dritte Werkstoff PA 6.6. Diese Materialien eignen sich insbesondere für Spritzgussbauteile aufgrund ihrer guten Leistungs- zu Kostenverhältnisse. Beide Werkstoffe besitzen ähnliche Eigenschaften und unterscheiden sich nur geringfügig. PA 66 zeichnet sich im Vergleich zu PA 6 durch eine sehr kurze Zykluszeit aus. Dies ist auf die hohe Erstarrungstemperatur und kürzere Kristallisationszeit zurückzuführen. Die langsamere Erstarrung von PA 6 erlaubt ohne zusätzliche Additive, Teile mit guter Oberfläche und weniger Verzug zu erhalten. Aufgrund dieser geringen Unterschiede in den Materialeigenschaften, insbesondere in der Steifigkeit bei Temperaturen unter 180 °C, können quasi einheitliche Komponenten hergestellt werden. Die trotzdem noch vorhandenen geringen Unterschiede in den Materialeigenschaften sind jedoch gerade für die kritischen, herstellungsrelevanten Parameter essenziell, insbesondere die unterschiedlichen Schmelzpunkte. Gerade dadurch zeichnet sich die Materialkombination von PA6 und PA66 besonders vorteilhaft aus.

Gemäß einem weiteren Aspekt wird eine Luftfeder, ein Luftfederbein oder ein Luftfederdämpfer mit einer Luftfederkomponente vorgeschlagen. Aufgrund der typischen auftretenden Belastungen bei einer Luftfeder, einem Luftfederbein oder einem Luftfederdämpfer eignet sich eine derartig hergestellte Luftfederkomponente aufgrund der hohen Dichtheit und dem kostengünstigen Herstellverfahren besonders.

Gemäß einem weiteren Aspekt wird ein Verfahren zur Herstellung einer Luftfederkomponente vorgeschlagen. Dabei werden in einem ersten Verfahrensschritt ein erstes Bauteil und ein zweites Bauteil mit korrespondierenden Fügebereichen in einem Spritzgießverfahren gegossen. Anschließend werden das erste Bauteil und das zweite Bauteil derart positioniert, sodass die korrespondierenden Fügebereiche der Bauteile einander gegenüberliegen. Zuletzt werden die Fügebereiche des ersten und des zweiten Bauteils mittels eines Fügewerkstoffs überspritzt. Somit kann das erste Bauteil mit dem zweiten Bauteil verbunden werden. Dies kann sowohl unmittelbar nach dem Spritzgießen, als auch beispielsweise 5 Tage nach dem Spritzgießen des ersten und des zweiten Bauteils geschehen.

Vorteilhaft werden die Fügebereiche beim Überspritzen wieder angeschmolzen. Dadurch ergibt sich der Vorteil, dass eine stoffschlüssige Verbindung zwischen dem ersten und dem zweiten Bauteil hergestellt werden kann.

In einer weiteren vorteilhaften Ausgestaltung des Herstellungsverfahrens werden die Fügebereiche beim Überspritzen zusammengedrückt. Es kann somit sichergestellt werden, dass die Bauteile eine dichte Verbindung eingehen.

Nachfolgend werden eine Luftfederkomponente, ein Verfahren zur Herstellung einer Luftfederkomponente sowie weitere Merkmale und Vorteile anhand von Ausführungsbeispielen näher erläutert, die in schematischer Weise in den beigefügten Zeichnungen dargestellt sind. Hierbei zeigt:
- Fig. 1: einen Längsschnitt durch eine Luftfeder mit einer ausgebildeten erfindungsgemäßen Luftfederkomponente;
- Fig. 2: einen Längsschnitt durch eine Luftfederkomponente;
- Fig. 3: eine Detailansicht A des Fügebereichs des Längsschnitts der Luftfederkomponente der Fig.2;
- Fig. 4: eine Detailansicht A eines alternativen Ausführungsbeispiels des Fügebereichs einer Luftfederkomponente der Fig.2;
- Fig. 5: eine Detailansicht A eines weiteren alternativen Ausführungsbeispiels des Fügebereichs einer Luftfederkomponente der Fig.2;
- Fig. 6: eine Detailansicht A eines weiteren alternativen Ausführungsbeispiels des Fügebereichs einer Luftfederkomponente der Fig.2;
- Fig. 7: Verfahrensschritte zur Herstellung einer Luftfederkomponente der Fig.2.

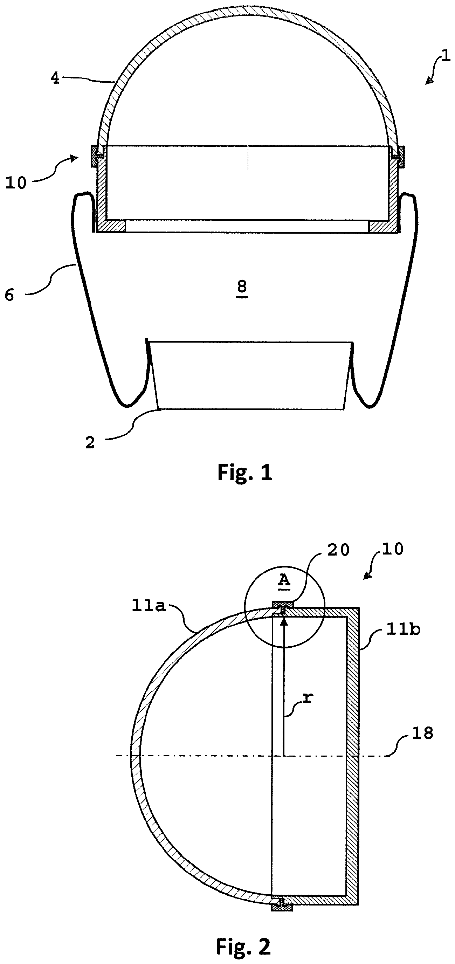

In Fig. 1 ist eine Luftfeder 1 im Längsschnitt dargestellt, die bei einem nicht dargestellten Kraftfahrzeug zwischen dem Fahrwerk und der Karosserie eingesetzt wird.

Die Luftfeder 1 weist einen Abrollkolben 2, eine Luftfederkomponente 10, die vorliegend als Luftfedertopf 4 ausgebildet ist, und einen Luftfederbalg 6, der mit einem ersten freien Ende an dem Abrollkolben 2 unter Ausbildung einer Rollfalte und mit einem zweiten freien Ende an dem Luftfedertopf 4 angebracht ist. Der Luftfederbalg 6 bildet dabei einen mit Luft gefüllten Luftfederinnenraum 8 aus. Während eines Ein- und Ausfederungsvorgangs rollt der Luftfederbalg 6 an der Außenseite des Abrollkolbens 2 ab.

In Fig. 2 ist eine Luftfederkomponente 10 für eine Luftfeder, ein Luftfederbein oder einen Luftfederdämpfer dargestellt, die ein erstes Bauteil 11a und ein zweites Bauteil 11b aufweist. Das erste Bauteil 11a und das zweite Bauteil 11b weisen jeweils korrespondierende Fügebereiche 12a und 12b auf. Die zusammen geführten Fügebereiche 12a, 12b sind mit einem Fügewerkstoff 20 überspritzt.

Das erste Bauteil 11a und das zweite Bauteil 11b stellen jeweils eine Schale dar. Durch das Verbinden der korrespondierenden Fügebereiche 12a, 12b mittels des Fügewerkstoffs 20 wird ein Hohlkörper begrenzt. Dieser Hohlkörper ist dazu ausgebildet, einen definierten Luftdruck zu halten.

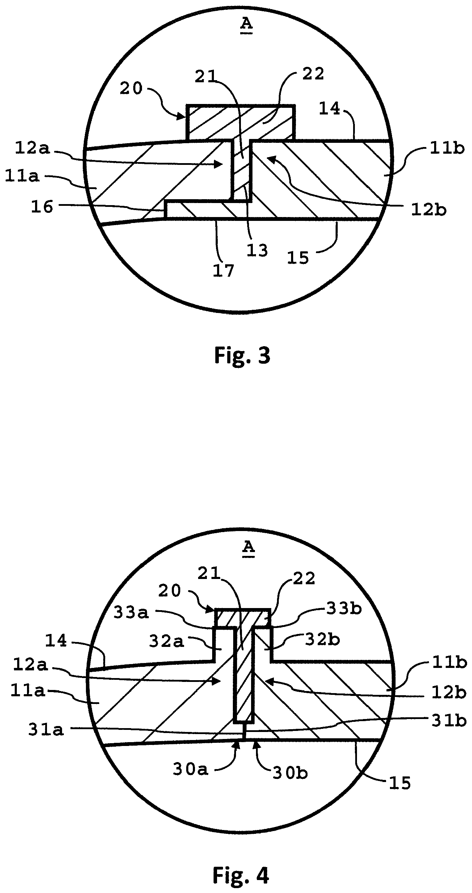

Die in Fig. 2 gezeigte Detailansicht A ist in Fig. 3 vergrößert dargestellt. Diese Detailansicht A zeigt die Fügebereiche 12a, 12b und den Fügewerkstoff 20, der von einer Außenseite 14 über die zusammen geführten Fügebereiche 12a, 12b des ersten und des zweiten Bauteils 11a, 11b gespritzt ist. Auf der gegenüberliegenden Seite der Außenseite 14 weist das erste und/oder das zweite Bauteil 11a, 11b eine Innenseite 15 auf. Diese Innenseite 15 begrenzt ein Volumen, das einen definierten Luftdruck aufweist.

Der Fügebereich 11a weist einen Rücksprung 16 und der Fügebereich 11b einen korrespondierenden Vorsprung 17 auf, wobei der Vorsprung 17 formschlüssig in den Rücksprung 16 eingreift. Der Rücksprung 16 und der Vorsprung 17 sind derart auf der Innenseite 15 des ersten und des zweiten Bauteils 11a, 11b angeordnet, sodass die Innenseite 15 des ersten und des zweiten Bauteils 11a, 11b in einer ebenen Fläche fluchtet.

Die Länge des Vorsprungs 17 ist länger als die Tiefe des Rücksprungs 16, sodass zwischen dem ersten und dem zweiten Bauteil in dem verbleibenden Fügebereich 12a, 12b ein Fügemittelfüllraum 13 gebildet ist, der zur Außenseite 14 hin eine Öffnung aufweist, in die der Fügemittelwerkstoff 20 während des Überspitzens eingespritzt werden kann.

Der Fügewerkstoff 20 weist einen primären Fügewerkstoffabschnitt 21 und einen sekundären Fügewerkstoffabschnitt 22 auf, wobei diese eine monolithische Einheit bilden. Der primäre Fügewerkstoffabschnitt 21 füllt den Fügemittelfüllraum 13, und der sekundäre Fügewerkstoffabschnitt 22 liegt auf der jeweiligen Außenseite 14 der Fügebereiche 12a, und 12b auf.

Indem der Fügewerkstoff 20 eine stoffschlüssige Verbindung mit dem ersten und dem zweiten Bauteil 11a, 11b eingeht, kann der primäre Fügewerkstoffabschnitt 21 auseinander ziehende Zugkräfte des ersten und des zweiten Bauteils aufnehmen, während der sekundäre Fügewerkstoffabschnitt 22 Scherkräfte aufnehmen kann.

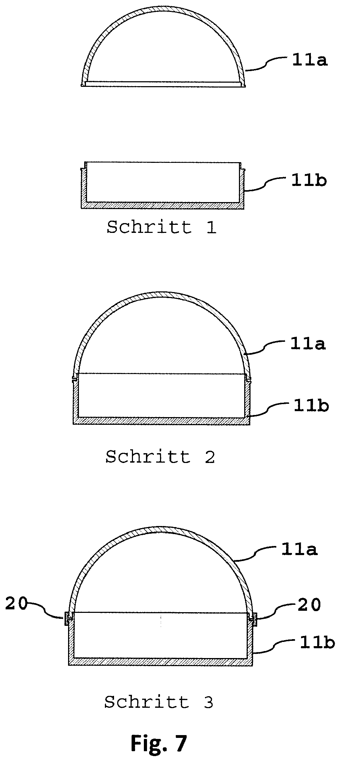

Fig. 7 zeigt drei Verfahrensschritte für eine mögliche Herstellung der Luftfederkomponente 10.

In einem ersten Schritt wird das erste Bauteil 11a und das zweite Bauteil 11b mittels eines Spritzgussverfahrens gespritzt.

In einem zweiten Schritt werden die korrespondierenden Fügebereiche 12a, 12b der Bauteile 11a, 11b derart positioniert, sodass diese einander gegenüberliegen und in Kontakt stehen.

In einem dritten Schritt werden die Bauteile 11a, 11b überspritzt. Während des Überspritzens werden die Bauteile 11a, 11b verpresst. Der Fügewerkstoff 20 weist während des Überspritzens eine derart hohe Temperatur auf, sodass das Material des ersten und/oder zweiten Bauteils 11a, 11b im Fügebereich 12a, 12b wieder aufschmilzt und somit eine stoffschlüssige Verbindung mit dem Fügewerkstoff 20 eingeht.

Nachfolgend werden weitere Ausführungsformen der Luftfederkomponente 10 beschrieben, wobei zu deren Beschreibung für gleiche oder funktionsgleiche Teile die bereits zuvor verwendeten Bezugszeichen verwendet werden.

Fig. 4 zeigt eine weitere Ausführungsform der Luftfederkomponente 10. Das erste Bauteil 11a weist einen Vorsprung 30a mit einer Anpressfläche 31a und das zweite Bauteil 11b weist einen Vorsprung 30b mit einer Anpressfläche 31b auf. Die Anpressflächen 31a, 31b sind derart ausgestaltet, dass diese aneinander gepresst werden können. Der jeweilige Vorsprung 30a, 30b ist derart ausgebildet, dass dieser nicht einknickt. Die Innenseite 15 der Vorsprünge 30a, 30b fluchtet in einer ebenen Fläche.

Der Fügemittelfüllraum 13 wird durch die korrespondierenden und aneinander gepressten Vorsprünge 30a, 30b zur Innenseite 15 begrenzt.

An der Außenseite 14 im Fügebereich 12a, 12b ragt ein Verankerungsvorsprung 32a des ersten Bauteils 11a und ein Verankerungsvorsprung 32b des zweiten Bauteils 11b ab. Der jeweilige Verankerungsvorsprung 32a, 32b weist am oberen Ende ein Plateau 33a, 33b auf.

Die Höhe des Fügemittelfüllraums 13 vergrößert sich mit der Länge des Verankerungsvorsprungs 32a, 32b. Dadurch wird eine vergrößerte Fläche für eine stoffschlüssige Verbindung zur Verfügung gestellt, die der primäre Fügewerkstoffabschnitt 21 mit dem ersten und/oder zweiten Bauteil 11a, 11b eingehen kann.

Auf dem Plateau 33a, 33b erstreckt sich der sekundäre Fügewerkstoffabschnitt 22 und weist im Kontaktbereich eine stoffschlüssige Verbindung auf.

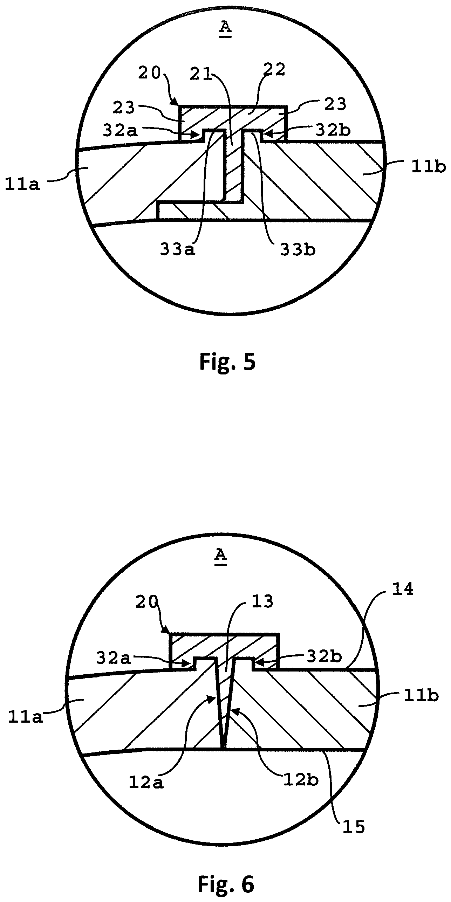

Fig. 5 zeigt eine weitere Ausführungsform der Luftfederkomponente 10. Der Fügebereich 12a, 12b weist ebenfalls den Verankerungsvorsprung 32a, 32b mit dem Plateau 33a, 33b auf. In den Fügemittelfüllraum 13 wird der Fügewerkstoff 20 gespritzt.

Der Fügewerkstoff 20 umfasst den primären Fügewerkstoffabschnitt 21, den sekundären Fügewerkstoffabschnitt 22 und einen tertiären Fügewerkstoffabschnitt 23, die eine monolithische Einheit bilden.

Der tertiäre Fügewerkstoffabschnitt 23 verläuft parallel zu dem primären Fügewerkstoffabschnitt 21 und umschließt den Verankerungsvorsprung 32a, 32b. Somit wird durch den tertiären Fügewerkstoffabschnitt 23 eine mechanische Verbindung mittels Formschluss gebildet. Zusätzlich geht der tertiäre Fügewerkstoffabschnitt 23 eine stoffschlüssige Verbindung im Kontaktbereich mit dem ersten und/oder zweiten Bauteil 11a, 11b ein.

Fig. 6 zeigt eine weitere Ausführungsform der Luftfederkomponente 10. Der Fügemittelfüllraum 13 ist zur Innenseite 15 konisch zulaufend ausgebildet. Das erste Bauteil 11a und das zweite Bauteil 11b werden beim Einspritzen des Fügewerkstoffs 20 aneinandergepresst und stehen an der Innenseite 15 in Kontakt.

Die Luftfederkomponente 10 zeichnet sich durch die einfach herzustellende stoffschlüssige Verbindung der aus Kunststoff, insbesondere PA6 und PA66, hergestellten Bauteile 11a, 11b aus. Dadurch erfüllen die Luftfederkomponenten 10 die an druckführende Luftfederbauteile gestellten Anforderungen hinsichtlich der Dichtheit, Festigkeit, Temperatur- und Alterungsbeständigkeit.

### Bezugszeichenliste

- 1: Luftfeder
- 2: Abrollkolben
- 4: Luftfedertopf
- 6: Luftfederbalg
- 8: Luftfederinnenraum

- 10: Luftfederkomponente
- 11a: Erstes Bauteil
- 11b: Zweites Bauteil
- 12a: Fügebereich des ersten Bauteils
- 12b: Fügebereich des zweiten Bauteils
- 13: Fügemittelfüllraum
- 14: Außenseite
- 15: Innenseite
- 16: Rücksprung
- 17: Vorsprung
- 18: Längsachse
- 20: Fügewerkstoff
- 21: Primärer Fügewerkstoffabschnitt
- 22: Sekundärer Fügewerkstoffabschnitt
- 23: Tertiärer Fügewerkstoffabschnitt
- 30a: Vorsprung des ersten Bauteils
- 30b: Vorsprung des zweiten Bauteils
- 31a: Erste Anpressfläche
- 31b: Zweite Anpressfläche
- 32a: Verankerungsvorsprung des ersten Bauteils
- 32a: Verankerungsvorsprung des zweiten Bauteils
- 33a: Plateau des ersten Bauteils
- 33b: Plateau des zweiten Bauteils

- A: Detailansicht

## Patentansprüche

1. Luftfederkomponente (10) für eine Luftfeder (1), ein Luftfederbein oder einen Luftfederdämpfer, aufweisend ein erstes Bauteil (11a) aus einem ersten Werkstoff, ein zweites Bauteil (11b) aus einem zweiten Werkstoff, einen Fügewerkstoff (20) aus einem dritten Werkstoff, wobei das erste Bauteil (11a) und das zweite Bauteil (11b) korrespondierende Fügebereiche (12a, 12b) aufweisen, wobei das erste Bauteil (11a) und das zweite Bauteil (11b) stoffschlüssig durch Überspritzen der Fügebereiche (12a, 12b) mit dem Fügewerkstoff (20) miteinander verbunden sind.

2. Luftfederkomponente (10) nach Anspruch 1, **dadurch gekennzeichnet, dass** der erste und der zweite Werkstoff einen niedrigeren Schmelzpunkt aufweisen als der dritte Werkstoff, sodass der erste und/oder der zweite Werkstoff beim Überspritzen mit dem dritten Werkstoff anschmilzt, um die beiden Bauteile stoffschlüssig zu verbinden.

3. Luftfederkomponente (10) nach einem der vorhergehenden Ansprüche, **dadurch gekennzeichnet, dass** das erste Bauteil (11a) und das zweite Bauteil (11b) axial beabstandet sind, sodass ein Fügemittelfüllraum (13) gebildet ist, in welchen der Fügewerkstoff (20) eingespritzt ist.

4. Luftfederkomponente (10) nach Anspruch 3, **dadurch gekennzeichnet, dass** der Fügemittelfüllraum (13) konisch zu einer Innenseite (15) hin zulaufend ausgebildet ist.

5. Luftfederkomponente (10) nach einem der vorhergehenden Ansprüche, **dadurch gekennzeichnet, dass** das erste Bauteil (11a) und das zweite Bauteil (11b) zu einem luftdichten Hohlkörper verbunden sind.

6. Luftfederkomponente (10) nach einem der vorhergehenden Ansprüche, **dadurch gekennzeichnet, dass** das erste Bauteil (11a) einen Rücksprung (16) und das zweite Bauteil (11b) einen Vorsprung (17) aufweist, wobei der Vorsprung (17) in den Rücksprung (16) formschlüssig eingreift.

7. Luftfederkomponente (10) nach Anspruch 6, **dadurch gekennzeichnet, dass** die Länge des Vorsprungs (17) auf die Tiefe des Rücksprungs (16) in der Art abgestimmt ist, dass sich in der formschlüssig eingegriffenen Position ein Fügemittelfüllraum (13) bildet, in welchen der Fügewerkstoff (20) einspritzbar ist.

8. Luftfederkomponente (10) nach einem der vorhergehenden Ansprüche, **dadurch gekennzeichnet, dass** das erste Bauteil (11a) einen ersten Vorsprung (30a) mit einer ersten Anpressfläche (31a) und das zweite Bauteil (11b) einen zweiten Vorsprung (30b) mit einer zweiten Anpressfläche (31b) aufweisen, wobei die erste und die zweite Anpressfläche (31a, 31b) geeignet sind, während des Überspritzens aufeinander gepresst zu werden.

9. Luftfederkomponente (10) nach einem der Ansprüche 3 bis 8, **dadurch gekennzeichnet, dass** der Fügewerkstoff (20) einen primären Fügewerkstoffabschnitt (21) und einen sekundären Fügewerkstoffabschnitt (22) aufweist, wobei der primäre Fügewerkstoffabschnitt (21) den Fügemittelfüllraum (13) füllt und der sekundäre Fügewerkstoffabschnitt (22) sich über einen Bereich der Außenseite (14) der Bauteile (11a, 11b) erstreckt, wobei das erste Bauteil (11a) und das zweite Bauteil (11b) einen Verankerungsvorsprung (32a, 32b) mit einem Plateau (33a, 33b) aufweisen, wobei sich der sekundäre Fügewerkstoffabschnitt (22) über das Plateau (33a, 33b) erstreckt.

10. Luftfederkomponente (10) nach Anspruch 9, **dadurch gekennzeichnet, dass** der Fügewerkstoff (20) einen tertiären Fügewerkstoffabschnitt (23) aufweist, wobei der tertiäre Fügewerkstoffabschnitt (23) im Wesentlichen parallel zum primären Fügewerkstoffabschnitt (21) verläuft und mindestens einen Teil des Verankerungsvorsprungs (32a, 32b) des ersten Bauteils (11a) und einen Teil des Verankerungsvorsprungs (32a, 32b) des zweiten Bauteils (11b) umschließt.

11. Luftfederkomponente (10) nach einem der vorhergehenden Ansprüche, **dadurch gekennzeichnet, dass** der erste Werkstoff und/oder der zweite Werkstoff PA 6 ist und der dritte Werkstoff PA 6.6 ist.

12. Luftfeder (1), Luftfederbein oder Luftfederdämpfer mit einer Luftfederkomponente (10) nach einem der Ansprüche 1 bis 11.

13. Verfahren zur Herstellung einer Luftfederkomponente (10) nach einem der Ansprüche 1 bis 11, aufweisend die folgenden Verfahrensschritte:
a. Spritzgießen eines ersten Bauteils (11a) und eines zweiten Bauteils (11b), wobei die Bauteile (11a, 11b) korrespondierende Fügebereiche aufweisen;
b. Positionieren des ersten Bauteils (11a) und des zweiten Bauteils (11b), sodass die korrespondierenden Fügebereiche (12a, 12b) einander gegenüberliegen;
c. Überspritzen der Fügebereiche (12a, 12b) mittels eines Fügewerkstoffs (20).

14. Verfahren nach Anspruch 13, **dadurch gekennzeichnet, dass** die Fügebereiche (12a, 12b) beim Überspritzen wieder angeschmolzen werden.

15. Verfahren nach Anspruch 13 oder 14, **dadurch gekennzeichnet, dass** die Fügebereiche beim Überspritzen zusammengedrückt werden.

## Claims

1. Air spring component (10) for an air spring (1), an air spring strut or an air spring damper, comprising a first component (11a) made of a first material, a second component (11b) made of a second material, a joining agent (20) made of a third material, the first component (11a) and the second component (11b) having corresponding joint regions (12a, 12b), the first component (11a) and the second component (11b) being connected to one another in a materially bonded manner by overmoulding the joint regions (12a, 12b) with the joining agent (20).

2. An air spring component (10) according to claim 1, **characterised in that** the first and second materials have a lower melting point than the third material such that the first and/or second materials melt when overmoulded with the third material to form a material bond between the two components.

3. Air spring component (10) according to one of the preceding claims, **characterised in that** the first component (11a) and the second component (11b) are axially spaced apart such that a joining agent filling space (13) is formed into which the joining agent (20) is injected.

4. Air spring component (10) according to claim 3, **characterised in that** the joining agent filling space (13) is designed to taper conically towards an inner side (15).

5. Air spring component (10) according to one of the preceding claims, **characterised in that** the first component (11a) and the second component (11b) are connected to form an airtight hollow body.

6. An air spring component (10) according to any one of the preceding claims, **characterised in that** the first component (11a) has a recess (16) and the second component (11b) has a projection (17), the projection (17) engaging positively in the recess (16).

7. Air spring component (10) according to claim 6, **characterised in that** the length of the projection (17) is matched to the depth of the recess (16) in such a way that, in the positively engaged position, a joining agent filling space (13) is formed into which the joining agent (20) can be injected.

8. An air spring component (10) according to any one of the preceding claims, **characterised in that** the first component (11a) comprises a first projection (30a) having a first pressing surface (31a) and the second component (11b) comprises a second projection (30b) having a second pressing surface (31b), the first and second pressing surfaces (31a, 31b) being adapted to be pressed against each other during overmoulding.

9. Air spring component (10) according to one of claims 3 to 8, **characterized in that** the joining agent (20) has a primary joining agent section (21) and a secondary joining agent section (22), the primary joining agent section (21) filling the joining agent filling space (13) and the secondary joining agent section (22) extending over a region of the outer side (14) of the components (11a, 11b), the first component (11a) and the second component (11b) having an anchoring projection (32a, 32b) with a plateau (33a, 33b), the secondary joining agent section (22) extending over the plateau (33a, 33b).

10. An air spring component (10) according to claim 9, **characterised in that** the joining agent (20) comprises a tertiary joining agent portion (23), the tertiary joining agent portion (23) extending substantially parallel to the primary joining agent portion (21) and enclosing at least part of the anchoring projection (32a, 32b) of the first component (11a) and part of the anchoring projection (32a, 32b) of the second component (11b).

11. Air spring component (10) according to one of the preceding claims, **characterised in that** the first material and/or the second material is PA 6 and the third material is PA 6.6.

12. Air spring (1), air spring strut or air spring damper with an air spring component (10) according to one of the claims 1 to 11.

13. A method of manufacturing an air spring component (10) according to any one of claims 1 to 11, comprising the following method steps:
a. Injection moulding of a first component (11a) and a second component (11b), the components (11a, 11b) having corresponding joining areas;
b. Positioning the first component (11a) and the second component (11b) such that the corresponding joining areas (12a, 12b) are opposite each other;
c. Overmoulding of the joining areas (12a, 12b) by a joining agent (20).

14. Method according to claim 13, **characterised in that** the joint areas (12a, 12b) are melted on again during overmoulding.

15. Method according to claim 13 or 14, **characterised in that** the joint areas are pressed together during overmoulding.

## Revendications

1. Composant de ressort pneumatique (10) pour un ressort pneumatique (1), une jambe de suspension pneumatique ou un amortisseur de ressort pneumatique, présentant un premier composant (11a) en un premier matériau, un deuxième composant (11b) en un deuxième matériau, un matériau d'assemblage (20) en un troisième matériau, le premier composant (11a) et le deuxième composant (11b) présentant des zones d'assemblage (12a, 12b) correspondantes, le premier composant (11a) et le deuxième composant (11b) étant reliés entre eux par liaison de matière par surmoulage des zones d'assemblage (12a, 12b) avec le matériau d'assemblage (20).

2. Composant de ressort pneumatique (10) selon la revendication 1, **caractérisé en ce que** le premier et le deuxième matériau présentent un point de fusion inférieur à celui du troisième matériau, de sorte que le premier et/ou le deuxième matériau fondent lors du surmoulage avec le troisième matériau afin de relier les deux composants par liaison de matière.

3. Composant de ressort pneumatique (10) selon l'une des revendications précédentes, **caractérisé en ce que** le premier composant (11a) et le deuxième composant (11b) sont espacés axialement de sorte qu'un espace de remplissage de matériau d'assemblage (13) est formé, dans lequel le matériau d'assemblage (20) est injecté.

4. Composant de ressort pneumatique (10) selon la revendication 3, **caractérisé en ce que** l'espace de remplissage de matériau d'assemblage (13) est réalisé de manière conique en direction d'un côté intérieur (15).

5. Composant de ressort pneumatique (10) selon l'une des revendications précédentes, **caractérisé en ce que** le premier composant (11a) et le deuxième composant (11b) sont reliés pour former un corps creux étanche à l'air.

6. Composant de ressort pneumatique (10) selon l'une des revendications précédentes, **caractérisé en ce que** le premier composant (11a) présente un retrait (16) et le deuxième composant (11b) une saillie (17), la saillie (17) s'engageant dans le retrait (16) par correspondance de forme.

7. Composant de ressort pneumatique (10) selon la revendication 6, **caractérisé en ce que** la longueur de la saillie (17) est adaptée à la profondeur du retrait (16) de telle sorte qu'il se forme, dans la position engagée par correspondance de forme, un espace de remplissage de matériau d'assemblage (13) dans lequel le matériau d'assemblage (20) peut être injecté.

8. Composant de ressort pneumatique (10) selon l'une quelconque des revendications précédentes, **caractérisé en ce que** le premier composant (11a) comprend une première saillie (30a) avec une première surface de pression (31a) et le second composant (11b) comprend une seconde saillie (30b) avec une seconde surface de pression (31b), les première et seconde surfaces de pression (31a, 31b) étant adaptées pour être pressées l'une contre l'autre pendant le surmoulage.

9. Composant de ressort pneumatique (10) selon l'une quelconque des revendications 3 à 8, **caractérisé en ce que** le matériau d'assemblage (20) comprend une section de matériau d'assemblage primaire (21) et une section de matériau d'assemblage secondaire (22), la section de matériau d'assemblage primaire (21) remplissant l'espace de remplissage de matériau d'assemblage (13) et la section de matériau d'assemblage secondaire (22) s'étendant sur une zone de la face extérieure (14) des composants (11a, 11b), le premier composant (11a) et le deuxième composant (11b) ayant une saillie d'ancrage (32a, 32b) avec un plateau (33a, 33b), la section de matériau d'assemblage secondaire (22) s'étendant sur le plateau (33a, 33b).

10. Composant de ressort pneumatique (10) selon la revendication 9, **caractérisé en ce que** le matériau d'assemblage (20) présente une section de matériau d'assemblage tertiaire (23), la section de matériau d'assemblage tertiaire (23) s'étendant sensiblement parallèlement à la section de matériau d'assemblage primaire (21) et entourant au moins une partie de la saillie d'ancrage (32a, 32b) du premier composant (11a) et une partie de la saillie d'ancrage (32a, 32b) du deuxième composant (11b).

11. Composant de ressort pneumatique (10) selon l'une des revendications précédentes, **caractérisé en ce que** le premier matériau et/ou le deuxième matériau est du PA 6 et le troisième matériau est du PA 6.6.

12. Ressort pneumatique (1), jambe de suspension pneumatique ou amortisseur pneumatique avec un composant de ressort pneumatique (10) selon l'une des revendications 1 à 11.

13. Procédé de fabrication d'un composant de ressort pneumatique (10) selon l'une quelconque des revendications 1 à 11, comprenant les étapes de procédé suivantes :
a. moulage par injection d'un premier composant (11a) et d'un deuxième composant (11b),
les composants (11a, 11b) présentant des zones d'assemblage correspondantes ;
b. positionner le premier composant (11a) et le deuxième composant (11b) de sorte que les zones d'assemblage correspondantes (12a, 12b) se fassent face ;
c. le surmoulage des zones d'assemblage (12a, 12b) au moyen d'un matériau d'assemblage (20).

14. Procédé selon la revendication 13, **caractérisé en ce que** les zones d'assemblage (12a, 12b) sont refondues lors du surmoulage.

15. Procédé selon la revendication 13 ou 14, **caractérisé en ce que** les zones d'assemblage sont comprimées lors du surmoulage.
